# EUROPEAN PATENT SPECIFICATION

(11) **EP 2 191 410 B1**
(45) Date of publication and mention of the grant of the patent: **08.10.2014**
(21) Application number: 08807343.2
(22) Date of filing: 18.08.2008
(51) Int. Cl.: G06F 21/73, G06F 21/76, H04L 9/32, G06F 7/58

(54) **IDENTIFICATION OF DEVICES USING PHYSICALLY UNCLONABLE FUNCTIONS**
IDENTIFIZIERUNG VON VORRICHTUNGEN MIT PHYSIKALISCH UNKLONBAREN FUNKTIONEN
IDENTIFICATION DE DISPOSITIFS UTILISANT DES FONCTIONS NON CLONABLES PHYSIQUEMENT

(30) Priority: 22.08.2007 EP 07114732
(43) Date of publication of application: 02.06.2010
(73) Proprietor: Intrinsic ID B.V., 5656 AE Eindhoven (NL)
(72) Inventor: GUAJARDO MERCHAN, Jorge, NL-5656 AE Eindhoven (NL); KUMAR, Shankaran, S., NL-5656 AE Eindhoven (NL); TUYLS, Pim, Theo, 2300 Tumhout (BE); SCHRIJEN, Geert, Jan, 5912 TD Venlo (NL)
(74) Representative: DeltaPatents B.V.
(86) International application number: PCT/IB2008/053299
(87) International publication number: WO 2009/024913

(56) References cited:
- US-A- 4 813 015
- US-A1- 2004 062 084
- HOLCOMB, BURLESON, FU: "Initial SRAM State as a Fingerprint and Source of True Random Numbers for RFID Tags"[Online] 11 July 2007 (2007-07-11), XP002519909 Conference on RFID Security 2007 Retrieved from the Internet: URL:http://rfidsec07.etsit.uma.es/slides/p apers/paper-12.pdf> [retrieved on 2009-03-18]
- DANIEL E. HOLCOMB: "Randomness in integrated circuits with applications in device identification and random number generation"[Online] 15 August 2007 (2007-08-15), pages 1-47, XP002519910 University of Massachusetts Amherst Retrieved from the Internet: URL:http://python.ecs.umass.edu/~icdg/publ ications/pdffiles/thesis_defense/dholcomb_ ms.pdf> [retrieved on 2009-03-18]
- NN: "Application Note 62 Dual Port RAM" APPLICATION NOTE 62, XX, XX, 3 June 1998 (1998-06-03), pages 1-6, XP002230875
- SU Y ET AL: "A 1.6pJ/bit 96% Stable Chip-ID Generating Circuit using Process Variations" SOLID-STATE CIRCUITS CONFERENCE, 2007. ISSCC 2007. DIGEST OF TECHNICAL PAPERS. IEEE INTERNATIONAL, IEEE, PI, 1 February 2007 (2007-02-01), pages 406-611, XP031180144 ISBN: 978-1-4244-0852-8
- SIMPSON E ET AL: "Offline HW/SW Authentication for Reconfigurable Platforms" INTERNET CITATION, [Online] 13 October 2006 (2006-10-13), pages 311-323, XP002496277 Retrieved from the Internet: URL:http://rijndel.ece.vt.edu/schaum/paper s/2006ches.pdf> [retrieved on 2008-09-16]

## Description

### FIELD OF THE INVENTION

This invention relates to a technique for generating a response to a physically unclonable function (PUF), particularly for use in identification of devices having challengeable memory and especially, but not necessarily exclusively, suitable for use in preventing cloning of such devices.

### BACKGROUND OF THE INVENTION

Physically unclonable functions (PUFs) are essentially random functions bound to a physical device in such a way that it is computationally and physically infeasible to predict the output of the function without actually evaluating it using the physical device. In other words, a Physically Unclonable Function (PUF) is realized by a physical system, such that the function is relatively easy to evaluate but the physical system is hard to characterize and hard to clone. Since a PUF cannot be copied or modeled, a device equipped with a PUF becomes unclonable. Physical systems that are produced by an uncontrolled production process (i.e. one that contains some randomness) are good candidates for PUFs. In this case, for example, a PUF computes its output by exploiting the inherent variability of wire delays and gate delays in manufactured circuits. These delays in turn depend on highly unpredictable factors, such as manufacturing variations, quantum mechanical fluctuations, thermal gradients, electromigration effects, parasitics, noise, etc. A good PUF is therefore not likely to be modeled succinctly, nor be predicted or replicated, even using identical hardware (which will still have different random manufacturing variations and associated delays, and thus yield an implemented function different from the first).

Field configurable devices, such as field programmable gate arrays (FPGAs), are typically configured using data, usually called a configuration bitstream or simply a bitstream, that is supplied to the device after the device is deployed in an application. For example, the configuration data may be provided to the device when the device is powered on. Significant revenue is lost due to issues such as cloning of such devices and/or unreported over-production thereof. As such, it is highly desirable to be able to uniquely identify a particular device and/or prevent configuration thereof with unauthorized configuration data.

One example of a PUF is known as a Coating PUF which is created by covering an IC with a coating that is doped with random dielectric particles. These particles have different dielectric constants (related to their chemistry) and have random sizes and shapes due to the production process. The top metal layer of the IC contains a matrix of sensor structures, which enables the local capacitance values at several positions on the coating to be measured and capacitance measurements at several coating locations (i.e. different challenges) can be used to derive a cryptographic key that can be used by the IC (internally) for several cryptographic purposes.

The PUF's physical system is designed such that it interacts in a particular way with stimuli (challenges) and leads to unique but unpredictable responses. A PUF challenge and the corresponding response are together called a Challenge-Response pair. US Patent Application Publication No. US 2006/0209584 A1 describes a field programmable gate array (FPGA) having a PUF module. The PUF module has a PUF circuit configured to generate a PUF response to a challenge signal. The module is designed such that when deployed in the field, the response for a particular challenge is difficult to determine from the device.

Configuration data, encrypted by the providing party using a secret key, is provided to the device in the field together with a challenge code and an access code derived from a combination of the secret key and the respective PUF response for an authorized device. The challenge code is used by the PUF circuit to generate a PUF response and this response is used, together with the access code, to reconstruct the secret key which, if the device is an authorized device, will enable the configuration data to be decrypted and the device to be configured.

However, this requires the creation of a unique bitstream to each FPGA in order to ensure that the correct response is achieved therefrom. This can be a complex process and has adverse cost implications.

Thus, it is one object of the present invention to provide an improved method for generating a unique response to a physically unclonable function in respect of each of a group of electronic devices having challengeable memory, using the same challenge signal, such that the configuration data (including data representative of the challenge signal) used to configure the electronic devices in the field can be the same for all of the devices.

### SUMMARY OF THE INVENTION

In accordance with the present invention there is provided a method of generating a response to a physically unclonable function, said response being uniquely representative of the identity of a device having challengeable memory, the memory comprising a plurality of logical locations each having at least two possible logical states, the method comprising applying a challenge signal to an input of said memory so as to cause each of said logical locations to enter one of said two possible logical states and thereby generate a response pattern of logical states, said response pattern being dependent on said physically unclonable function which is defined by the physical characteristics of said memory, the method further comprising reading out said response pattern.

In a first exemplary embodiment, said memory has at least two access ports, the method comprising accessing said plurality of logical storage locations via said at least two access ports so as to create a contention, and using resulting response data read from said logical locations to generate said response to said physically unclonable function.

In a second exemplary embodiment, the memory comprises an array of components having an unstable state and at least two stable states, the method comprising applying an excitation signal to each of said components so as to drive each of said components into a respective one of said at least two stable states, and generating output data comprised of the resultant response data comprised of the resultant response data comprised of the combination of respective states of said components to generate said response to said physically unclonable function.

In accordance with the first exemplary embodiment, data in the form of a challenge pattern may be written to at least one of the at least two access ports, and the resulting response pattern stored in said memory is read out and used to generate said response to said physically unclonable function. In this case, a respective challenge pattern may be written via each of said at least two access ports simultaneously to said memory to create said contention. Alternatively, a challenge pattern may be written to said memory via one of said at least two access ports and data is simultaneously read from said memory via another of said at least two access ports. The challenge pattern may be applied to one or both of the at least two access ports and may, for example, comprise one of all 0's, all 1's or a predefined or random pattern of 1's and 0's. The memory may, for example, comprise a dual port memory.

In accordance with the second exemplary embodiment, each of said components may comprise a cross-coupled loop having an unstable state and at least two stable states. In this case, each cross coupled loop may comprise a pair of latches, each latch having an input terminal and an output terminal, said latches being cross-coupled such that the output of a first latch is applied to the input terminal of a second latch and the output of the second latch is applied to the input terminal of the first latch, the excitation signal being applied to a clear input of one of the latches and a preset input of the other latch. The cross-coupled loop could be arranged and configured such that it is in said unstable state when said excitation signal is high and, when said excitation signal goes low, said cross-coupled loop is driven to output one of said at least two stable states.

The present invention extends to a system including hardware and/or software arranged and configured to perform the method defined above.

Also, in accordance with the present invention, there is provided a method of providing identification data in respect of a device having challengeable memory, comprising the steps of generating a response to a physically unclonable function in respect of said device by means of the method defined above, associating a verification key with said device and generating helper data that maps said response to said physically unclonable function for said device onto said associated verification key.

Further, in accordance with the present invention, there is provided an electronic component comprising an electronic device and means for storing identification data generated by performing the method defined above in respect of said electronic device. The means for storing said identification data may comprise non-volatile memory means.

The present invention extends to a method of manufacturing a group of electronic components as defined above, the method comprising manufacturing a plurality of electronic devices, generating a response to a respective physically unclonable function in respect of each of said electronic devices by means of the method as defined above, providing identification data in respect of each of said devices by means of the method defined above, and storing identification data for each of said devices in association with the respective device.

The invention extends further to an electronic storage device on which is stored configuration data for configuring a field programmable electronic component as defined above, said configuration data including data representative of said one or more challenge signals used to generate said response to said physically unclonable function according to the method defined above.

The invention extends still further to a method of verifying the identity of a device having challengeable memory, the method comprising the steps of generating a response to a physically unclonable function in respect of said device by means of the method defined above, retrieving identification data generated according to the method defined above, performing a key extraction algorithm using said response and the helper data included in said retrieved identification data to extract a key in respect of said electronic device and comparing said extracted key with said verification key associated with said device.

The verification key could, for example, be one used for a symmetric key encryption algorithm, a secret key for a public key algorithm, or a secret key for an identification protocol. The present invention is not, however, intended to be limited in this regard.

Also, in accordance with the present invention, there is provided a method of generating a response to a plurality of physically unclonable functions, each response being uniquely representative of the identity of a respective device of a plurality of such devices of the same design, each device having challengeable memory, the method comprising applying the same one or more input signals to each memory of said plurality of devices, reading the resulting output data from each said memory, and using said output data from each said memory to generate a respective unique response.

Preferably, each said memory comprises a plurality of logical locations each having at least two possible logical states or values, the method comprising applying said one or more input signals to said plurality of logical locations so as to cause each logical location to occupy one of said at least two states, and reading the resultant output data comprised of the states or values held by said plurality of logical locations as a result of application of said one or more input signals thereto.

Also, in accordance with the present invention, there is provided a method of providing identification data in respect of a plurality of devices of the same design, each device having challengeable memory, the method comprising the steps of generating a respective response to a physically unclonable function in respect of each device by means of the method defined above, associating a unique verification key with each said device and generating helper data that maps the respective response to a physically unclonable function for each said device onto said associated verification key.

Also, in accordance with the present invention, there is provided a method of manufacturing a group of electronic components as defined above, the method comprising manufacturing a plurality of electronic devices, generating a respective response to a physically unclonable function in respect of each of said electronic devices by means of the method defined above, providing identification data in respect of each of said devices by means of the method defined above, and storing identification data for each of said devices in association with the device.

Thus, in general, the present invention makes use of the fact that the response of several, otherwise identical, programmable electronic devices to the application of the same challenge signal will vary due to the physical characteristics of the device, which vary due to factors such as the production process or age of the device. This variation determines the physically unclonable function for each device.

These and other aspects of the present invention will be apparent from, and elucidated with reference to, the embodiments described herein.

For completeness it is mentioned that the paper "Initial SRAM state as a fingerprint and source of true random numbers for RFID tags" by D. Holcomb, W. Burleson, and K. Fu., published in Proceedings of the Conference on RFID Security, discloses using initial SRAM states as a source of fingerprinting data.

For completeness it is mentioned that the US patent 4813 015 discloses an x-y random access memory array for performing pushing and popping of data and for splitting the array simultaneously at a common address, comprising a plurality of storage elements being stacked in a plurality of rows to form an x-y organization which can be randomly accessed in response to row and column addresses; each of said storage elements includes a single-bit memory cell, each memory cell being formed of a pair of cross-coupled latches. Column shift enable signals, first clock pulses, and second clock pulses are enabled to storage elements located in columns with column addresses being the other one of higher and lower than a selected column so as to shift their data.

### BRIEF DESCRIPTION OF THE DRAWINGS

Embodiments of the present invention will now be described by way of examples only and with reference to the accompanying drawings, in which:
Fig. 1 is a schematic block diagram illustrating the principal steps of a method according to an exemplary embodiment of the present invention for providing identification data in respect of an electronic device (enrolment procedure);
Fig. la is a schematic block diagram illustrating the principal steps of a method according to an exemplary embodiment of the present invention for verifying the identity of an electronic device having identification data associated therewith (authentication phase);
Fig. 2 is a schematic block diagram illustrating a simple dual port memory;
Fig. 3 is a schematic block diagram illustrating a true dual port memory;
Fig. 4 is a schematic diagram illustrating a contention in a TDPRAM caused by a simultaneous read via one port from a memory location while writing data to the same memory location from the other port;
Fig. 5 is a schematic diagram illustrating a contention in a TDPRAM caused by writing of data to the same memory location simultaneously via the two ports;
Fig. 6 is illustrative of a response pattern which may result due to a contention in a TDPRAM caused by writing two fixed challenge patterns to the same memory location simultaneously via the two ports;
Fig. 7 is illustrative of a response pattern which may result due to a contention in a TDPRAM caused by writing two different challenge patterns to the same memory location simultaneously via the two ports;
Fig. 8 is a schematic circuit diagram illustrating a cross-coupled inverters latch circuit;
Fig. 9 illustrates graphically the operating point of the latch of Fig. 8;
Fig. 10 is a schematic circuit diagram illustrating a butterfly latch structure, suitable for use in an exemplary embodiment of the present invention;
Figs. 11 and 12 show the inter-class hamming distance (variation in hamming distance for measurements performed on the same FPGA) and the inter-class Hamming distance (hamming distance variations for measurements performed on different FPGAs) respectively obtained by experimentation in respect of an exemplary embodiment of the present invention.

### DETAILED DESCRIPTION

In the following, reference is made to dual port random access memory devices and true dual port random access memory devices (DPRAMs and TDPRAMs respectively). It will, however, be appreciated that the present invention is equally applicable to the unique identification (and/or prevention of cloning) of any logic device including a component in which contention may occur, where contention results are based on the physical characteristics of the device which vary due to the inherent variability in wire delays and gate delays caused by factors such as the production process or the age of the device, and the present invention is not intended to be limited in this regard.

Dual Port Random Access Memory (DPRAM) cells are widely used as interconnects for two asynchronous processes. They are found, for example, in modem computer systems, video cards and field programmable gate arrays (FPGAs). Furthermore, they are increasingly used as dedicated building blocks in consumer products. DPRAM allow the memory to be accessed simultaneously from two different ports and hence enable multiple systems to access the same data. However, reading and writing to the same memory location from the two ports can lead to a contention which has to be dealt with using arbitration logic. Indeed a person skilled in the art will be aware of other components and devices in which similar contention events can occur for which arbitration logic may be required.

Implementing arbitration logic in the device hardware is expensive and inflexible. Therefore, most DPRAMs and other devices in which contention is an issue do not implement any arbitration logic in hardware, instead placing the onus on the software to be executed thereby to deal with contention.

In accordance with a first exemplary embodiment of the invention, the inventors have determined that contention results in components and devices of the above-mentioned type vary between individual, otherwise identical devices, based on their respective physical characteristics which vary due to the production process or age of the device.

Field programmable gate arrays (FPGAs) are widely used for prototyping of electronic designs and algorithms. Furthermore, they are increasingly used as dedicated electronic building blocks in consumer products. Their main advantage compared with ASICs (application-specific integrated circuits) is their flexibility, as they can be reconfigured in the field.

A popular type of FPGA is the SRAM based FPGA. This type of FPGA chip has only volatile memory on board and hence loses its configuration when the power is switched off. On power-up, the FPGA is configured by means of a bit stream that is loaded from an external non-volatile memory (e.g. programmable Read-Only memory(PROM), Flash, etc). These FPGAs now also have embedded true dual-ported SRAM blocks in different amounts and configurations. Such TDPRAM blocks tend not to have any built-in arbitration logic to deal with contention events caused by reading and/or writing simultaneously to the same memory location. Thus, such blocks typically demonstrate contention behavior, as will be described in more detail below.

The present invention provides a relatively inexpensive technique for protecting the configuration bitstream against pure cloning and, at least to a certain extent, against reverse engineering. The underlying principal of the present invention enables the bitstream to be bound to the particular FPGA it is intended to configure. The present invention has the additional advantage that all of the FPGAs still use the same bitstream (in other words, and in contrast to the prior art, the PUF for each FPGA is generated using the same challenge or input signal/data), which gives a significant cost/compiling benefit. Furthermore, the invention can be implemented without any change to the FPGA hardware.

In summary, a design *d* is translated according to the invention into a design *d'* which has the same functionality as design *d* but performs some checks on the FPGA on which it is loaded. This implies that the bitstream *b* corresponding to design *d* is translated, according to the invention, into a bitstream *b'* corresponding to design *d'* (which has the same functionality but performs some additional checks during execution). These checks are intended to determine whether or not the configuration is running on the correct FPGA.

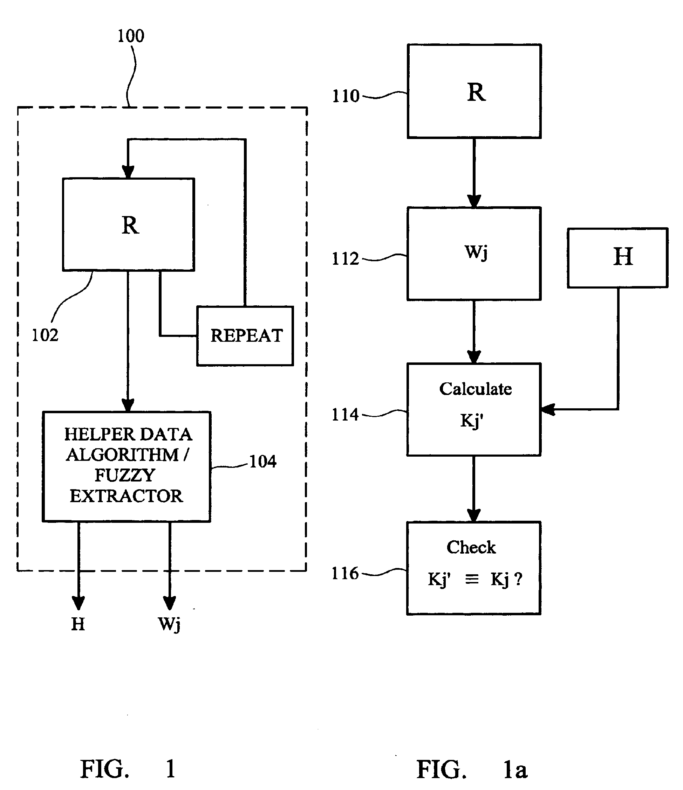

Referring to Figure 1 of the drawings, in a method according to an exemplary embodiment of the present invention, during an enrolment phase 100, the PUF response for each FPGA*ᵢ* is obtained (step 102). This step may be repeated one or more times to ensure consistency. The enrolment phase 100 can be performed by the manufacturer at the time of production but can, alternatively, be performed at a later point in time by a trusted third party. The PUF data is derived from the memory response pattern generated due to contention by writing two challenge patterns to the two ports simultaneously, as will now be described in more detail.

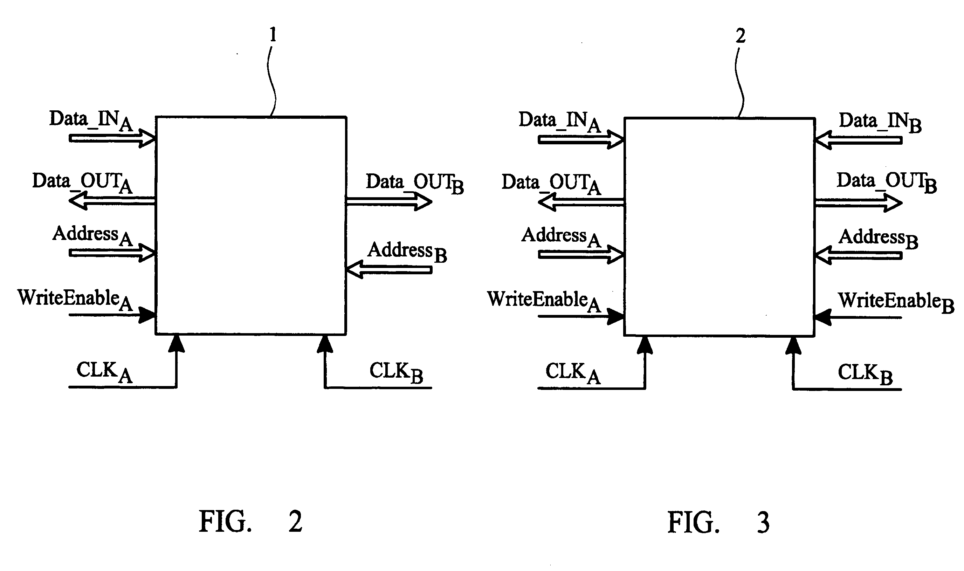

Dual port memories which are used in different systems vary in the writing and reading capabilities on the two ports. Referring to Figure 2 of the drawings, a simple dual port memory 1 allows writing only on one port and reading from two different ports. Dual port memories that are used to interface two processors which have to exchange data require true dual port memories (TDPRAMs). Referring to Figure 3, a TDPRAM 2 has two independent ports for writing and reading data to the same memory location. This enables simultaneous reading from and writing into the memory from two ports. However, as explained above, reading and writing to the same memory location from the two ports can lead to a contention which has to be managed, typically by arbitration logic included in the software running on the systems.

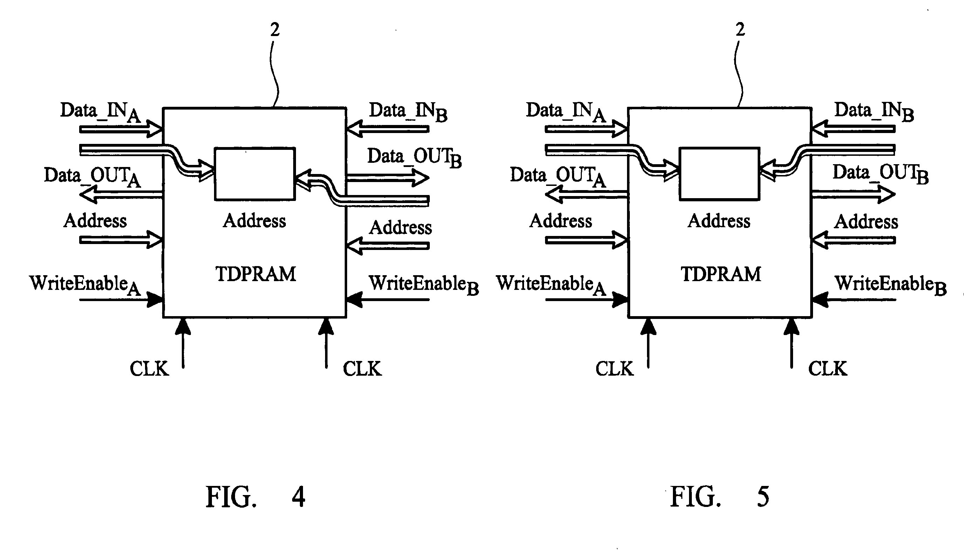

There are two types of contention that arise in TDPRAMs in the absence of arbitration logic. Firstly, when one port writes to a memory location and the second port reads from the same memory location simultaneously, as illustrated schematically in Figure 4. In this case, the data read out is not predictable although the data is written safely and stored into the specified memory location. The second type of contention arises when both ports attempt to write to the same memory location simultaneously, as illustrated schematically in Figure 5 of the drawings. If different data is being written to the same memory location via two respective ports, then the data actually stored in that memory location will be unpredictable. The unpredictability in both of the above-mentioned types of contention arises due to small differences in timing, capacitance or driving capacities of the internal logic at different memory locations. Such minor differences arise in CMOS gates due to gate delays which are caused by factors such as the unpredictability of the production process or the age of the device.

In the following description, the contention caused by writing different data to the same memory location via the two ports (Figure 5) will be described in more detail. However, it will be appreciated that the type of contention illustrated and described with reference to Figure 4 is equally applicable to this exemplary embodiment of the present invention.

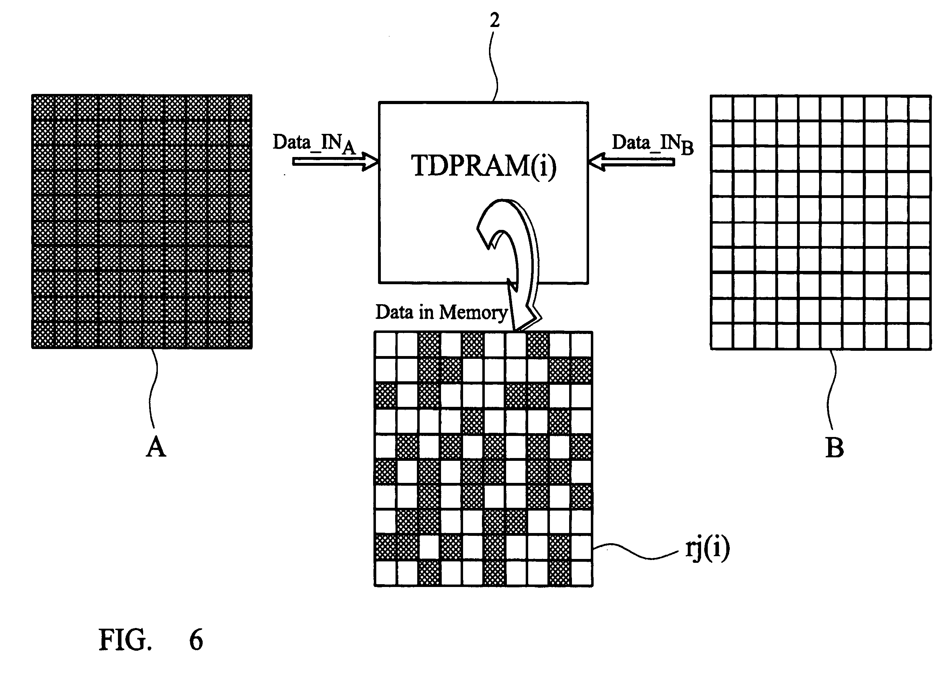

Referring to Figure 6 of the drawings, a first challenge pattern A is applied to a first port of a TDPRAM (i) 2 in the form of Data_IN_{A} and a second challenge pattern B is applied to the second port of the TDPRAM (i) 2 in the form of Data_IN_{B}, the two sets of data being simultaneously written to the same memory location. In the example shown, Data_IN_{A} comprises all 1's and Data_IN_{B} comprises all 0's. However, other data patterns can be used, as will be described below, and this exemplary embodiment is not intended to be limited in this regard.

The data rⱼ(*i*) stored in the specified memory location as a result of the above-described simultaneous write is then read out and, as shown, the pattern thus read out is very different to both of the data sets written to the memory. The resultant pattern is unpredictable and varies between TDPRAMs due to small differences in timing, capacitance or driving capacities of the internal logic at different memory locations. As explained above, such minor differences arise in CMOS gates due to gate delays which are caused by factors such as the unpredictability of the production process or the age of the device. Thus, contention results tend to be unique for each TDPRAM due to individual device characteristics, and it is this feature which can be exploited in the present invention to enable a PUF to be generated that is inseparably bound to the respective chip and to enable unique chip identification.

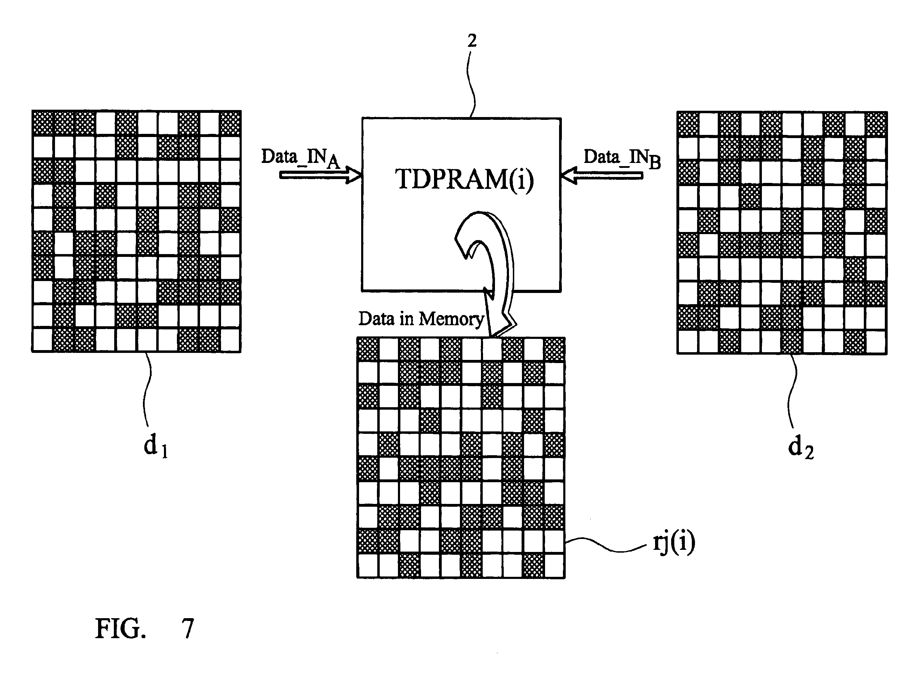

Returning now to Figure 1, during the enrolment phase 100, PUF response data is derived for each SRAM block of an FPGA i from the response pattern (R) generated by contention by writing two challenge patterns to the two ports simultaneously. In other words, all (or a subset (1,2,3,...n) in any order or combination) of the dual ported SRAM blocks 1 to n of the FPGA are written with different data to the same memory location simultaneously and the resultant data written to that memory location is read out, as shown schematically in Figure 7. It is possible to define 2²ⁿ different patterns for this purpose, where n is the bit size of the respective memory. These patterns could be fixed or random, and may comprise one of the following:
- All 0's port A, all 1's port B
- All 1's port A, all 0's port B (as in the example illustrated in Figure 6)
- Random pattern on port A, bitwise inversion of the same pattern on port B
- Random pattern on port A, random pattern on port B
- First store a fixed or random value in the memory location and then perform any one of the above combinations.

However, it will be appreciated that this list of possibilities is not exhaustive and other options will be apparent to a person skilled in the art.

The enrolment phase 100 (and PUF response (R) generation step 102) is performed in respect of all FPGAs in the group.

After obtaining the contention response R from each PUF, respective public helper data H is selected such that C = R XOR H, where C is the code word of an error correcting code (i.e. a verification key). The public helper data H is considered to be public data and should, in this case, be chosen uniformly at random from a large set so as to map the response R to a random code word or verification key. This procedure of choosing a random H and choosing the appropriate verification key happens in a secure environment during the so-called enrolment procedure. A number of verification keys *K₁*,...,*Kₙ* are defined, one for each SRAM block (at step 104), by a trusted third party (TTP) or certification authority, which comprises a company providing the service of protecting bitstreams loaded onto the FPGAs. As will be well known to a person skilled in the art, the verification keys each comprise an algorithmic pattern which, in this exemplary embodiment of the present invention, is embedded in the configuration data stored in the non-volatile memory associated with the device to be configured. The concept of a key here is intended to signify the unique pattern *Kⱼ* derived from the SRAM block. In practice, one or more cryptographic keys can be derived from this pattern *Kⱼ.* In addition, this will be application dependent.

Finally, main helper data *W₁(i),...,Wₙ(i)* is computed for each SRAM block 1 to n of every FPGA *i.* Each item of helper data *Wⱼ(i)* is calculated such that the output *rⱼ*(*i*) read from SRAM block j of FPGA i leads, together with the public helper data H, to the respective verification key *Kⱼ.*

The general concept of computing helper data for this purpose is known to persons skilled in the art and alternative methods and implementations thereof are described more fully in, for example, J.P. Linnartz, P. Tuyls, 'New Shielding Functions to Enhance Privacy and Prevent Misuse of Biometric Templates', In J. Kittler and M. Nixon, editors, Proceedings of the 3rd Conference on Audio and Video Based Person Authentication, volume 2688 of Lecture Notes in Computer Science, pages 238-250, Springer-Verlag, 2003 and Y. Dodis et al, 'Fuzzy extractors: How to generate strong keys from biometrics and other noisy data', Advances in cryptology - Eurocrypt 2004, Ser. LNCS, C.Cahin and J. Camenisch, Eds., vol.3027. Springer-Verlag, 2004, pp. 523-540.

In practice, other information can be included in the main helper data *Wⱼ* indicating, for example, which memory locations or block(s) of RAM are under consideration, or how many bits of each RAM are being considered.

The helper data *W₁(i),...,Wₙ(i)* for SRAM blocks 1 to n is stored on the non-volatile memory that contains the design (i.e. configuration bitstream) for FPGA i.

In a next step, the design d (i.e. the unmodified configuration bitstream for FPGA *i)* is converted into a modified design *d'* by adding some verification checks. In more detail, the bitstream d has some additional instructions added thereto which, when loaded onto the FPGA i, perform the verification checks that will now be described with reference to Figure 1a.

Referring to Figure 1a, during the authentication phase, in response to receipt of *d'*, the FPGA *i* simultaneously writes the respective challenge patterns A and B (provided in *d'*) to both ports simultaneously of each SRAM block 1 to n (or a subset of these SRAM blocks), and reads the written data so as to obtain the respective PUF response (R') (at step 110) for FPGA i. This is preferably done by reading the TDPRAM data from random locations in the memory, details of which random locations would need to be hidden in the final bitstream. Alternatively, the random locations can be included in the helper data. Next, the appropriate helper data *W₁(i),...,Wₙ(i)* is loaded from the non-volatile memory (at step 112) and a key extraction algorithm is run at step 114 (based on the PUF output and the helper data), which leads to a verification key *Kⱼ.* For the case identified above, this involves 'XORing' the response R' with the helper data H to obtain a code word C'. It will be appreciated here that alternative methods of obtaining C' are possible. For example, a fuzzy extractor/helper data algorithm could be used to derive the verification key. Going back to this illustrative example, if the number of errors is within the error correcting capabilities of the error correcting code, then a decoding procedure can be used to obtain C. Otherwise, if there are too many errors, then the decoding procedure of the error correcting code returns an invalid/error signal and stops. Thus, in this final step, a check is performed on the validity of the extracted key *Kⱼ'* at step 116. One method of performing the above-mentioned check on the extracted key *Kⱼ*' in respect of this exemplary embodiment is as follows. As stated above, in this case, the original key *Kⱼ* is embedded in the configuration code and is the same for all of the FPGAs (thus, the design is always the same). A check is performed to determine whether or not the extracted key *Kⱼ'* is the same as the embedded key *Kⱼ.* If so, the program continues. If not, some other appropriate measure can be taken. Such measures include, but are by no means limited to:
- resetting the entire FPGA;
- resetting certain areas of the memory;
- stopping the controller and forcing it into a so-called 'dead' state (from which it cannot return);
- disabling certain parts of the main design, thereby offering a solution with less functionality;
- producing random outputs that are completely uncorrelated to the operations performed by the main design;
- erasing the contents of the non-volatile memories, where the original configuration file for the FPGA is stored and then rest;
- any combination of the above procedures.

In an alternative embodiment, although the method for verifying the extracted key involves a check that *Kⱼ'*=*Kⱼ*, an alternative method might involve checking that d(*Kⱼ'*,*Kⱼ*)⇐t where d is an appropriate distance function (e.g. Hamming distance) and t some predefined threshold.

Although relatively straightforward methods of verifying the extracted key are envisaged and mentioned above, other methods of verifying the validity of the extracted key will be apparent to a person skilled in the art, and the present invention is not intended to be limited in this regard. For example, the check could be more sophisticated by checking another function F of the extracted key and embedded keys. Such a function F could be a cryptographic function such as a one-way or encryption function using K as a key and a standard message m as plain text.

It will be further appreciated that, while the present invention has been described above in terms of combining the creation of a configuration bitstream with the PUF extraction algorithm, this is not essential. Applications are envisaged whereby the PUF extraction algorithm is performed without the configuration bitstream.

Cross-coupled circuits are widely used in electronic circuits to implement storage elements like latches, flip-flops and SRAM memory. A cross-coupled circuit when constructed properly can create a positive-feedback loop to store a desired bit value. Such circuits are used in all kinds of devices like FPGAs, ASICs and other embedded devices.

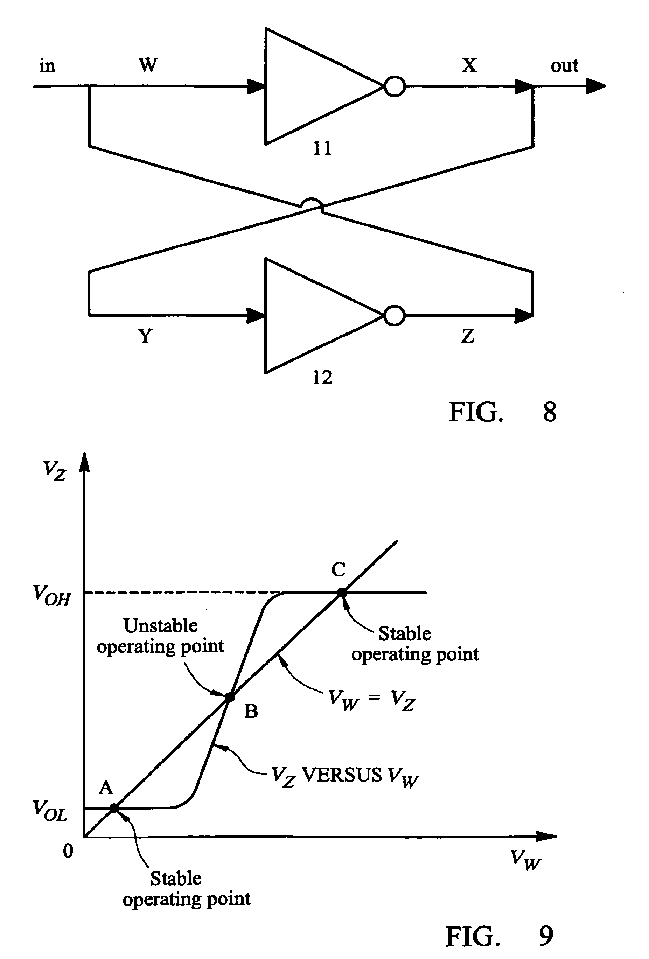

A cross-coupled circuit is a basic building block for almost all kinds of storage elements in electronic circuits like latches, flip-flops and SRAM memories. A cross-coupled circuit is constructed such that it provides a positive-feedback to store the required bit value within the loop. An example of such a circuit is a simple latch built using two cross-coupled inverters as shown in Figure 8.

However, such cross-coupled circuits have two different stable operating points (to store the bit value) and an unstable operating point as shown in Figure 9. The circuit can be relatively easily driven from the unstable state to a stable state by an external signal on the input or due to slight differences in the elements used to build the circuit (here inverters). This fact can be used in accordance with a second exemplary embodiment of the invention to build a PUF where the circuit is initially at the unstable operating point and let to attain one of the two stable operating points without any external excitation. We find that with a high probability the circuit goes more to one of the operating points based on small differences in the wire delays and the voltage transfer characteristics of the cross-coupled element (in this case an inverter). Different cross-coupled devices can be built using different elements like NOR gates or NAND gates.

Implementing a cross-coupled element using combinational logic on FPGA is not necessarily straightforward due to the inability to create combinational loops. To overcome this problem, a cross-coupled combinational loop can be simulated using latches present in the FPGA. In one exemplary embodiment, a butterfly structure may be created using the latches that allows for an unstable state by an excite signal and settles down to one of the two stable states after some time.

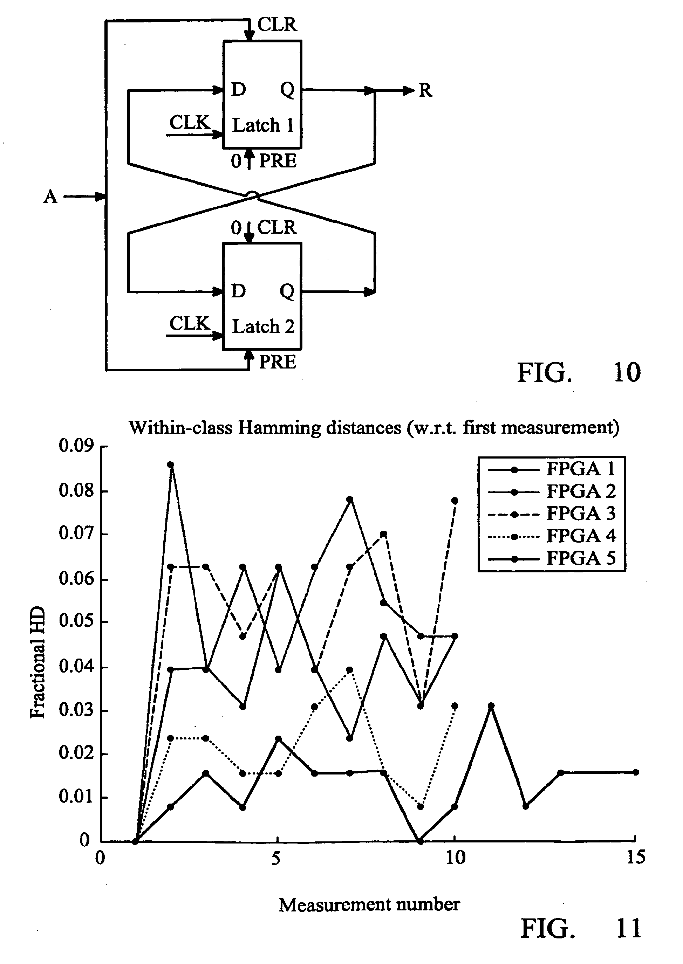

The structure of the circuit is as shown in Figure 10. It consists of two latches, each with preset *PRE* (set Q to 1 on high) and clear *CLR* (set Q to 0 on high) input. The data D is transferred on the output Q when the *CLK* is high. The *PRE* of Latch 1 and *CLR* of Latch 2 are always set to low. The excite signal is connected to *CLR* of Latch 1 and *PRE* of Latch 2. The outputs of the latch are cross-coupled and we set *CLK* to both latches to high always effectively simulating a combinational loop. When excite goes high, the circuit is in an unstable operating point and after excite goes to low, the output *out* is either one of the stable states 0 or 1.

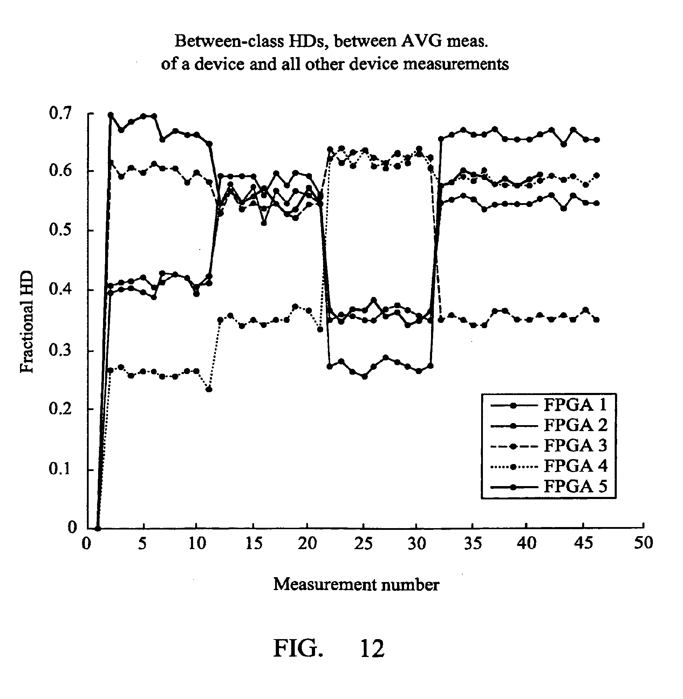

By the construction of an array of 128 butterfly structures on a Spartan-3e Xilinx FPGA, experimental results show that for the same FPGA the hamming distance is at most 9% and for different FPGA (done with 5 FPGAs) is at least 23%. This can be seen from Figures 11 and 12, which show both the intra-class hamming distance (variation in hamming distance for measurements performed on the same FPGA) and the inter-class Hamming distance (hamming distance variations for measurements performed on different FPGAs).

As a result, by applying the same challenge signal to the cross-coupled loops of each array, a unique PUF (made up of the combination of resultant states of each loop) representative of the respective FPGA can be generated.

Once the PUF has been generated in this manner, the remainder of the enrolment phase and the authentication phase for preventing clonability of FPGAs can be the same as that described in relation to Figures 1 and 1a.

It should be noted that the above-mentioned embodiments illustrate rather than limit the invention, and that those skilled in the art will be capable of designing many alternative embodiments without departing from the scope of the invention as defined by the appended claims.

For example, before the configuration bitstream is stored in the non-volatile memory of the device, it may be encrypted and, once *Kⱼ*' has been extracted and verified, it may be used to decrypt the bitstream. In one exemplary embodiment, once a device has been configured by a bitstream, it may be used to configure a second device. In an alternative embodiment, the resulting bitstream may be used to reconfigure the device on which it was originally loaded or part of the device. In another exemplary embodiment, the key generated/extracted from the PUF is used to encrypt some program instructions to a computer program for a processor configured on the device. In another exemplary embodiment, the key generated/extracted from the PUF is used to encrypt or decrypt data generated by other circuitry configured on the device and later used as the output of another operation. In yet another exemplary embodiment, a Message Authentication Code (MAC) or digital signature derived from a public-key signature algorithm may be computed in respect of the key extracted using the PUF or just the PUF data during the enrolment phase. This MAC or digital signature can be stored on a memory external to the device and later compared with a value that is computed during bitstream authentication. In the case of a MAC, the private or secret key can be stored within the configuration file of the FPGA.

In the exemplary embodiments described in detail above, the methods of PUF generation and verification are used in relation to preventing clonability of field programmable logic devices. However, a much broader scope of potential applications is envisaged. For example, the PUF data generated according to a method of the present invention may be used as a seed to a pseudo-random number generator or as the key for a private or public key encryption algorithm. The present invention could also be used for tracking purposes as each device has its own identifiable PUF. Finally, the method of generating a PUF according to the first exemplary embodiment of the invention is not limited to the use of dual ported RAM but can be used in any device where contention results are based on the physical characteristics of the device which vary due to factors such as the production process or age of the device; and the method of generating a PUF according to the second exemplary embodiment of the invention is not limited to the described butterfly latch structures but can employ any cross-coupled loops which have an unstable state and two stable states.

In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A method of generating a response to a physically unclonable function, said response being uniquely representative of the identity of a device having memory, the memory comprising an array of components each having an unstable state and at least two stable states, each of said components comprising a cross-coupled loop having the unstable state and at least two stable states, each cross coupled loop comprising a pair of latches (Latch 1, Latch 2), the method comprising:
- applying the excitation signal to each of said components so as to drive each of said components from the unstable state into a respective one of said at least two stable states, and using resulting response data comprised of the combination of respective states of said components to generate a response to said physically unclonable function, said response being dependent on, and defined by, the physical characteristics of said memory, the method further comprising reading out said response.

2. A method according to claim 1, each latch having an input terminal and an output terminal, said latches being cross-coupled such that the output of a first latch is applied to the input terminal of a second latch and the output of the second latch is applied to the input terminal of the first latch, the excitation signal being applied to a clear input of one of the latches and a preset input of the other latch.

3. A method according to claim 2, wherein said cross-coupled loop is arranged and configured such that it is in said unstable state when said excitation signal is high and, when said excitation signal goes low, said cross-coupled loop is driven to output one of said at least two stable states.

4. A method according to claim 1 implemented on a field programmable gate array (FPGA).

5. A device having memory, the memory comprising an array of components each having an unstable state and at least two stable states, each of said components comprising a cross-coupled loop having the unstable state and at least two stable states, each cross coupled loop comprising a pair of latches, the device comprising
- response generating means for generating a response to a physically unclonable function, said response being uniquely representative of the identity of the device,
- excitation signal applying means for applying an excitation signal to each of said components so as to drive each of said components from the unstable state into a respective one of said at least two stable states, and using resulting response data comprised of the combination of respective states of said components to generate the response to said physically unclonable function, said response being dependent on, and defined by, the physical characteristics of said memory,
- reading means for reading out said response pattern.

6. A method of providing identification data comprising the method of claim 1, further comprising associating a unique verification key with said device and generating helper data that maps the respective response to said physically unclonable function for said device onto said associated verification key, the identification data including the helper data.

7. A method of providing identification data as in claim 6, further comprising storing the identification data onto means for storing identification data, and wherein the device is an electronic device and wherein the means for storing identification data and the electronic device are comprised in an electronic component.

8. An electronic component comprising an electronic device as in Claim 5 and means for storing identification data obtained by the method of Claim 7.

9. An electronic component according to claim 8, wherein said means for storing said identification data comprises non-volatile memory means.

10. A method of manufacturing an electronic component comprising an electronic device and means for storing identification data the method comprising manufacturing the electronic device, providing identification data in respect of said device by means of the method of claim 6, and storing identification data for said device in association with the device.

11. An electronic storage device on which is stored configuration data for configuring a field programmable electronic component according to claim 8, said configuration data including data representative of said excitation signal used to generate said response to said physically unclonable function according to the method of claim 1.

12. A method of verifying the identity of a device having memory, the method comprising the steps of generating a response to a physically unclonable function in respect of said device by means of the method of claim 1, retrieving identification data generated according to the method of claim 6, performing a key extraction algorithm using said generated physically unclonable function and the helper data included in said retrieved identification data to extract a key in respect of said electronic device and comparing said extracted key with said verification key associated with said device.

13. A method of generating a plurality of responses to respective physically unclonable functions comprising the method of claim 1, each response being uniquely representative of the identity of a respective device of a plurality of such devices of the same design, the device being one of the plurality of devices, each device having memory, each memory comprising an array of components each having an unstable state and at least two stable states, each of said components comprising a cross-coupled loop having the unstable state and at least two stable states, each cross coupled loop comprising a pair of latches,
the method comprising applying the same one or more excitation signal to the memory of each of said plurality of devices, and reading the resulting response data from the memory of each of said plurality of devices,
the method comprising applying said one or more excitation signals to each of said components so as to drive each of said components into a respective one of said at least two stable states, and reading resulting response data comprised of the combination of respective states of said components as a result of application of said one or more excitation signals thereto.

14. A method of providing identification data in respect of a plurality of electronic devices of the same design, comprising the steps of generating a respective response to a physically unclonable function in respect of each device by means of the method of claim 13, associating a unique verification key with each said device and generating helper data that maps the respective response to the physically unclonable function for each said device onto said associated verification.

15. A method of manufacturing a group of electronic components according to claim 8, the method comprising manufacturing a plurality of electronic devices, generating a respective response to a physically unclonable function in respect of each of said electronic devices by means of the method of claim 13, providing identification data in respect of each of said devices by means of the method of claim 6, and storing identification data for each of said devices in association with the device.

16. A method as in any one of claims 6, 7, 10, 12, 14 and 15, wherein the verification key is used as any one of a symmetric key encryption algorithm, a secret key for a public key algorithm, and a secret key for an identification protocol.

## Patentansprüche

1. Ein Verfahren zum Generieren einer Antwort auf eine physikalisch unklonbare Funktion, wobei die Antwort eindeutig bezeichnend ist für die Identität einer Vorrichtung mit Speicher, wobei der Speicher eine Reihe von Komponenten umfasst, die jeweils einen unstabilen Zustand und wenigstens zwei stabile Zustände aufweisen, wobei jede der Komponenten eine quergekoppelte Schleife umfasst, die den unstabilen Zustand und die wenigstens zwei stabilen Zustände aufweist, wobei jede quergekoppelte Schleife ein Paar Latches (Latch 1, Latch 2) umfasst, wobei das Verfahren Folgendes umfasst:
- Anwenden des Anregungssignals auf jede der Komponenten, um jede der Komponenten vom unstabilen Zustand in jeweils einen der wenigstens zwei stabilen Zustände zu führen, sowie Verwenden der daraus resultierenden Antwortdaten, bestehend aus der Kombination der jeweiligen Zustände der Komponenten, zum Generieren einer Antwort auf die physikalisch unklonbare Funktion, wobei die Antwort von den physikalischen Eigenschaften des Speichers abhängig ist und definiert wird, wobei das Verfahren ferner das Auslesen der Antwort umfasst.

2. Ein Verfahren nach Anspruch 1, wobei jedes Latch ein Eingangsterminal und ein Ausgangsterminal aufweist, wobei die Latches quergekoppelt sind, so dass der Ausgang eines ersten Latchs an das Eingangsterminal eines zweiten Latchs angelegt ist und der Ausgang des zweiten Latchs an das Eingangsterminal des ersten Latchs angelegt ist, wobei das Anregungssignal auf einen freien Eingang von einem der Latches und einen voreingestellten Eingang des anderen Latchs angewandt wird.

3. Ein Verfahren nach Anspruch 2, wobei die quergekoppelte Schleife so angeordnet und konfiguriert ist, dass sie sich im unstabilen Zustand befindet, wenn das Anregungssignal hoch ist, und wenn das Anregungssignal abnimmt, wird die quergekoppelte Schleife veranlasst, einen der wenigstens zwei stabilen Zustände auszugeben.

4. Ein Verfahren nach Anspruch 1, implementiert auf einem feldprogrammierbaren Gate-Array (FPGA).

5. Eine Vorrichtung mit Speicher, wobei der Speicher eine Reihe von Komponenten umfasst, die jeweils einen unstabilen Zustand und wenigstens zwei stabile Zustände aufweisen, wobei jede der Komponenten eine quergekoppelte Schleife umfasst, die den unstabilen Zustand und die wenigstens zwei stabilen Zustände aufweist, wobei jede quergekoppelte Schleife ein Paar Latches umfasst, wobei die Vorrichtung Folgendes umfasst:
- Antwortgenerierungsmittel zum Generieren einer Antwort auf eine physikalisch unklonbare Funktion, wobei die Antwort eindeutig bezeichnend ist für die Identität der Vorrichtung,
- Anregungssignal-Anwendungsmittel zum Anwenden eines Anregungssignals auf jede der Komponenten, um jede der Komponenten vom unstabilen Zustand in jeweils einen der wenigstens zwei stabilen Zustände zu führen, sowie Verwenden der daraus resultierenden Antwortdaten, bestehend aus der Kombination der jeweiligen Zustände der Komponenten, zum Generieren der Antwort auf die physikalisch unklonbare Funktion, wobei die Antwort von den physikalischen Eigenschaften des Speichers abhängig ist und definiert wird,
- Auslesemittel zum Auslesen des Antwortmusters.

6. Ein Verfahren zum Bereitstellen von Identifikationsdaten, umfassend das Verfahren nach Anspruch 1, ferner umfassend das Zuordnen eines eindeutigen Verifizierungsschlüssels zur Vorrichtung und das Generieren von Helferdaten, die die jeweilige Antwort auf die physikalisch unklonbare Funktion auf den zugeordneten Verifizierungsschlüssel abbilden, wobei die Identifikationsdaten die Helferdaten beinhalten.

7. Ein Verfahren zum Bereitstellen von Identifikationsdaten nach Anspruch 6, ferner umfassend das Speichern der Identifikationsdaten auf Mitteln zum Speichern von Identifikationsdaten, und wobei die Vorrichtung eine elektronische Vorrichtung ist, und wobei die Mittel zum Speichern von Identifikationsdaten und die elektronische Vorrichtung in einer elektronischen Komponente enthalten sind.

8. Eine elektronische Komponente, umfassend eine elektronische Vorrichtung nach Anspruch 5 und Mittel zum Speichern von Identifikationsdaten, die mithilfe des Verfahrens nach Anspruch 7 erhalten werden.

9. Eine elektronische Komponente nach Anspruch 8, wobei die Mittel zum Speichern der Identifikationsdaten nichtflüchtige Speichermittel umfassen.

10. Ein Verfahren zum Herstellen einer elektronischen Komponente, umfassend eine elektronische Vorrichtung und Mittel zum Speichern von Identifikationsdaten, wobei das Verfahren das Herstellen der elektronischen Vorrichtung, das Bereitstellen von Identifikationsdaten in Bezug auf die Vorrichtung mithilfe des Verfahrens nach Anspruch 6 und das Speichern von Identifikationsdaten für die Vorrichtung in Verbindung mit der Vorrichtung umfasst.

11. Eine elektronische Speichervorrichtung, auf der Konfigurationsdaten zum Konfigurieren einer feldprogrammierbaren elektronischen Komponente nach Anspruch 8 gespeichert sind, wobei die Konfigurationsdaten Daten beinhalten, die für das Anregungssignal bezeichnend sind, das zum Generieren der Antwort auf die physikalisch unklonbare Funktion gemäß dem Verfahren nach Anspruch 1 verwendet wird.

12. Ein Verfahren zum Verifizieren der Identität einer Vorrichtung mit Speicher, wobei das Verfahren die Schritte des Generierens einer Antwort auf eine physikalisch unklonbare Funktion in Bezug auf die Vorrichtung mithilfe des Verfahrens nach Anspruch 1, des Abrufens von Identifikationsdaten, die gemäß dem Verfahren nach Anspruch 6 generiert werden, des Ausführens eines Schlüsselextraktionsalgorithmus unter Verwendung der generierten physikalisch unklonbaren Funktion und der Helferdaten, die in den abgerufenen Identifikationsdaten enthalten sind, um einen Schlüssel in Bezug auf die elektronische Vorrichtung zu extrahieren, und des Vergleichens des extrahierten Schlüssels mit dem Verifizierungsschlüssel, der der Vorrichtung zugeordnet ist, umfasst.

13. Ein Verfahren zum Generieren von mehreren Antworten auf entsprechende physikalisch unklonbare Funktionen, umfassend das Verfahren nach Anspruch 1, wobei jede Antwort eindeutig bezeichnend ist für die Identität einer entsprechenden Vorrichtung von mehreren solchen Vorrichtungen der gleichen Ausführung, wobei die Vorrichtung eine der mehreren Vorrichtungen ist, wobei jede Vorrichtung einen Speicher aufweist, wobei jeder Speicher eine Reihe von Komponenten umfasst, die jeweils einen unstabilen Zustand und wenigstens zwei stabile Zustände aufweisen, wobei jede der Komponenten eine quergekoppelte Schleife umfasst, die den unstabilen Zustand und die wenigstens zwei stabilen Zustände aufweist, wobei jede quergekoppelte Schleife ein Paar Latches umfasst,
wobei das Verfahren das Anwenden ein und desselben oder mehrerer Anregungssignale auf den Speicher von jeder der mehreren Vorrichtungen und das Lesen der resultierenden Antwortdaten vom Speicher jeder der mehreren Vorrichtungen umfasst,
wobei das Verfahren das Anwenden eines oder mehrerer Anregungssignale auf jede der Komponenten umfasst, um jede der Komponenten in jeweils einen der wenigstens zwei stabilen Zustände zu führen, sowie das Lesen der daraus resultierenden Antwortdaten, bestehend aus der Kombination der jeweiligen Zustände der Komponenten als Ergebnis der Anwendung des einen oder der mehreren Anregungssignale darauf.

14. Ein Verfahren zum Bereitstellen von Identifikationsdaten in Bezug auf mehrere elektronische Vorrichtungen der gleichen Ausführung, umfassend die Schritte des Generierens einer entsprechenden Antwort auf eine physikalisch unklonbare Funktion in Bezug auf jede Vorrichtung mithilfe des Verfahrens nach Anspruch 13, des Zuordnens eines eindeutigen Verifizierungsschlüssels zu jeder Vorrichtung und des Generierens von Helferdaten, die die jeweilige Antwort auf die physikalisch unklonbare Funktion für jede Vorrichtung auf die zugeordnete Verifizierung abbilden.

15. Ein Verfahren zum Herstellen einer Gruppe von elektronischen Komponenten nach Anspruch 8, wobei das Verfahren das Herstellen von mehreren elektronischen Vorrichtungen, das Generieren einer entsprechenden Antwort auf eine physikalisch unklonbare Funktion in Bezug auf jede der elektronischen Vorrichtungen mithilfe des Verfahrens nach Anspruch 13, das Bereitstellen von Identifikationsdaten in Bezug auf jede der Vorrichtungen mithilfe des Verfahrens nach Anspruch 6 und das Speichern der Identifikationsdaten für jede der Vorrichtungen in Verbindung mit der Vorrichtung umfasst.

16. Ein Verfahren nach einem der Ansprüche 6, 7, 10, 12, 14 und 15, wobei der Verifizierungsschlüssel entweder als Verschlüsselungsalgorithmus mit symmetrischem Schlüssel, als Geheimschlüssel für einen öffentlichen Schlüsselalgorithmus oder als Geheimschlüssel für ein Identifikationsprotokoll verwendet wird.

## Revendications

1. Un procédé de génération d'une réponse à une fonction physiquement inclonable, ladite réponse étant uniquement représentative de l'identité d'un dispositif ayant une mémoire, la mémoire comprenant un réseau de composants ayant chacun un état instable et au moins deux états stables, chacun desdits composants comprenant une boucle de couplage transversal ayant l'état instable et au moins deux états stables, chaque boucle de couplage transversal comprenant une paire de circuits à verrouillage (circuit à verrouillage 1, circuit à verrouillage 2), le procédé comprenant :
- l'application du signal d'excitation à chacun desdits composants afin de faire passer chacun desdits composants de l'état instable à un état respectif choisi parmi lesdits au moins deux états stables, et l'utilisation des données de réponse résultantes composées de la combinaison des états respectifs desdits composants pour générer une réponse à ladite fonction physiquement inclonable, ladite réponse dépendant des caractéristiques physiques de ladite mémoire et étant définie par les caractéristiques physiques de ladite mémoire, le procédé comprenant en outre la lecture de ladite réponse.

2. Un procédé selon la revendication 1, chaque circuit à verrouillage ayant une borne d'entrée et une borne de sortie, lesdits circuits à verrouillage étant couplés transversalement de façon que la sortie d'un premier circuit à verrouillage soit appliquée à la borne d'entrée d'un second circuit à verrouillage et que la sortie du second circuit à verrouillage soit appliquée à la borne d'entrée du premier circuit à verrouillage, le signal d'excitation étant appliqué à une entrée libre d'un des circuits à verrouillage et à une entrée prédéterminée de l'autre circuit à verrouillage.

3. Un procédé selon la revendication 2, dans lequel ladite boucle de couplage transversal est conçue et configurée de façon à être dans ledit état instable quand ledit signal d'excitation est élevé et, quand ledit signal d'excitation devient bas, ladite boucle de couplage transversal est excitée pour sortir un desdits au moins deux états stables.

4. Un procédé selon la revendication 1, mis en oeuvre par un circuit intégré prédiffusé programmable (FPGA).

5. Un dispositif comportant une mémoire, la mémoire comprenant un réseau de composants ayant chacun un état instable et au moins deux états stables, chacun desdits composants comprenant une boucle de couplage transversal ayant l'état instable et au moins deux états stables, chaque boucle de couplage transversal comprenant une paire de circuits à verrouillage, le dispositif comprenant :
- un moyen de génération de réponse servant à générer une réponse à une fonction physiquement inclonable, ladite réponse étant uniquement représentative de l'identité du dispositif,
- un moyen d'application d'un signal d'excitation servant à appliquer un signal d'excitation à chacun desdits composants afin de faire passer chacun desdits composants de l'état instable à un état respectif choisi parmi lesdits au moins deux états stables, et à utiliser les données de réponse résultantes composées de la combinaison des états respectifs desdits composants pour générer la réponse à ladite fonction physiquement inclonable, ladite réponse dépendant des caractéristiques physiques de ladite mémoire et étant définie par les caractéristiques physiques de ladite mémoire,
- des moyens de lecture servant à lire ledit profil de réponse.

6. Un procédé permettant de fournir des données d'identification comprenant le procédé de la revendication 1, comprenant en outre l'association d'une clé unique de vérification audit dispositif et la génération de données d'assistance qui cartographient la réponse respective à ladite fonction physiquement inclonable pour ledit dispositif sur ladite clé de vérification associée, les données d'identification incluant les données d'assistance.

7. Un procédé permettant de fournir des données d'identification selon la revendication 6, comprenant en outre le stockage des données d'identification sur un moyen de stockage de données d'identification, et dans lequel le dispositif est un dispositif électronique et dans lequel le moyen de stockage de données d'identification et le dispositif électronique sont compris dans un composant électronique.

8. Un composant électronique comprenant un dispositif électronique selon la revendication 5 et un moyen de stockage de données d'identification obtenues par le procédé de la revendication 7.

9. Un composant électronique selon la revendication 8, dans lequel ledit moyen de stockage desdites données d'identification comprend un moyen à mémoire non volatile.

10. Un procédé de fabrication d'un composant électronique comprenant un dispositif électronique et un moyen de stockage de données d'identification, le procédé comprenant la fabrication du dispositif électronique, la fourniture de données d'identification concernant ledit dispositif au moyen du procédé de la revendication 6, et le stockage des données d'identification pour ledit dispositif en association avec le dispositif.

11. Dispositif électronique de stockage sur lequel sont stockées des données de configuration servant à configurer un composant électronique programmable sur place selon la revendication 8, lesdites données de configuration comportant des données représentatives dudit signal d'excitation utilisé pour générer ladite réponse à ladite fonction physiquement inclonable selon le procédé de la revendication 1.

12. Un procédé de vérification de l'identité d'un dispositif ayant une mémoire, le procédé comprenant les étapes de génération d'une réponse à une fonction physiquement inclonable en ce qui concerne ledit dispositif au moyen du procédé de la revendication 1, de récupération des données d'identification générées selon le procédé de la revendication 6, de mise en oeuvre d'un algorithme d'extraction de clé en utilisant ladite fonction physiquement inclonable générée et les données d'assistance incluses dans lesdites données d'identification récupérées pour extraire une clé concernant ledit dispositif électronique et de comparaison de ladite clé extraite à ladite clé de vérification associée audit dispositif.

13. Un procédé permettant de générer une pluralité de réponses à des fonctions physiquement inclonables respectives comprenant le procédé de la revendication 1, chaque réponse étant uniquement représentative de l'identité d'un dispositif respectif d'une pluralité de ces dispositifs ayant la même conception, le dispositif étant un dispositif de la pluralité de dispositifs, chaque dispositif ayant une mémoire, chaque mémoire comprenant un réseau de composants ayant chacun un état instable et au moins deux états stables, chacun desdits composants comprenant une boucle de couplage transversal ayant l'état instable et au moins deux états stables, chaque boucle de couplage transversal comprenant une paire de circuits à verrouillage,
le procédé comprenant l'application d'un ou de plusieurs signaux d'excitation identiques à la mémoire de chaque dispositif de ladite pluralité de dispositifs, et la lecture des données de réponse résultantes à partir de la mémoire de chaque dispositif de ladite pluralité de dispositifs,
le procédé comprenant l'application dudit signal d'excitation ou desdits signaux d'excitation à chacun desdits composants afin de faire passer chacun desdits composants à un état respectif choisi parmi lesdits au moins deux états stables, et la lecture des données de réponse résultantes composées de la combinaison des états respectifs desdits composants résultant de l'application dudit signal d'excitation ou desdits signaux d'excitation à ceux-ci.

14. Un procédé permettant de fournir des données d'identification concernant une pluralité de dispositifs électroniques ayant la même conception, comprenant les étapes de génération d'une réponse respective à une fonction physiquement inclonable en ce qui concerne chaque dispositif au moyen du procédé de la revendication 13, d'association d'une clé unique de vérification à chacun desdits dispositifs et de génération de données d'assistance qui cartographient la réponse respective à ladite fonction physiquement inclonable pour chacun desdits dispositifs sur ladite vérification associée.

15. Un procédé de fabrication d'un groupe de composants électroniques selon la revendication 8, le procédé comprenant la fabrication d'une pluralité de dispositifs électroniques, la génération d'une réponse respective à une fonction physiquement inclonable en ce qui concerne chacun desdits dispositif électroniques au moyen du procédé de la revendication 13, la fourniture de données d'identification concernant chacun desdits dispositifs au moyen du procédé de la revendication 6 et le stockage des données d'identification pour chacun desdits dispositifs en association avec le dispositif.

16. Un procédé selon l'une quelconque des revendications 6, 7, 10, 12, 14 et 15, dans lequel la clé de vérification est utilisée aussi bien comme algorithme de chiffrement symétrique de clé, comme clé secrète pour algorithme à clé publique ou comme clé secrète pour un protocole d'identification.
